# EUROPÄISCHE PATENTANMELDUNG

(11) **EP 3 334 135 A1**
(43) Veröffentlichungstag der Anmeldung: **13.06.2018**
(21) Anmeldenummer: 17001881.6
(22) Anmeldetag: 17.11.2017
(51) Int. Cl.: H04M 1/725, G06K 19/07, H04M 9/00, H04M 1/727

(54) **PERSONALISIERUNG VON ENDGERÄTEN EINES INTERCOM-NETZWERKES, INTERCOM-NETZWERK UND VERFAHREN**

(30) Priorität: 09.12.2016 DE 102016123968; 03.04.2017 DE 102017107150
(71) Anmelder: RIEDEL Communications International GmbH, 42109 Wuppertal (DE)
(72) Erfinder: Lee, Jiou-Pahn, 42109 Wuppertal (DE); Riedel, Thomas, 42109 Wuppertal (DE)
(74) Vertreter: Roche, von Westernhagen & Ehresmann

(57) **Zusammenfassung**

Die Erfindung betrifft unter anderem einen Teilnehmer (11a, 11b, 11c, 11d, 11e, 11f, 11g) eines Intercom-Netzwerkes (10) zur Durchführung von Echtzeit-Audiokommunikation mit anderen Teilnehmern dieses Intercom-Netzwerkes, umfassend einen Audio-Eingang, insbesondere ein Mikrophon (14, 14a, 14b, 14c, 14d, 14e, 14f) oder einen Mikrophon-Anschluss (28), und einen Verbindungsanschluss (29) oder ein Kommunikationsmodul (30) zur Verbindung mit einer Vermittlungsstelle (19a, 19b) des Intercom-Netzwerkes, umfassend wenigstens eine als Parameter einstellbare, insbesondere manuell einstellbare, Funktionalität, wie Tastenbelegung, Zielruf-Kurzwahltaste, Helligkeit, Lautstärke oder dergleichen. Die Besonderheit besteht unter anderem darin, dass an dem Teilnehmer ein NFC-Element (22, 22a, 22b, 22c, 22d, 22e, 22f) angeordnet ist, mit dem eine Kommunikation mit einem, einer Bedienperson (25) zugeordneten NFC-Gegenelement (23), durchführbar ist.

## Beschreibung

Die Erfindung betrifft zunächst einen Teilnehmer eines Intercom-Netzwerkes nach dem Oberbegriff des Anspruches 1.

Derartige Intercom-Netzwerke werden von der Anmelderin seit Jahrzehnten entwickelt und gefertigt. Die Anmelderin gehört zu den weltweit führenden Unternehmen im Bereich der Intercom-Netzwerke.

Intercom-Netzwerke und gattungsgemäße Teilnehmer dieser Intercom-Netzwerke sind in den beiden deutschen Patentanmeldungen der Anmelderin DE 10 2014 011 963 A1 und DE 10 2014 104 811 A1 beschrieben.

Ein Teilnehmer eines Intercom-Netzwerkes der bekannten Art kann mit anderen Teilnehmern dieses Intercom-Netzwerkes in Echtzeit eine Audio-Kommunikation durchführen. Hierzu umfasst der Teilnehmer einen Audio-Eingang. Dabei kann es sich beispielsweise um ein Mikrophon handeln, in das eine Bedienperson Audio-Informationen unmittelbar hinein sprechen kann. Als Audio-Eingang im Sinne dieser Patentanmeldung wird aber alternativ auch ein Mikrophon-Anschluss oder Headset-Anschluss verstanden, also beispielsweise eine Buchse zur Aufnahme eines Steckers für eine Kabelverbindung zum Anschluss eines Mikrophons an dem Teilnehmer.

Der Teilnehmer weist darüber hinaus einen Verbindungsanschluss auf, mit dem der Teilnehmer mittelbar oder unmittelbar mit einer Vermittlungsstelle des Intercom-Netzwerkes verbindbar ist. Der Verbindungsanschluss dient der Anbindung eines Kabels. Alternativ weist der Teilnehmer ein Kommunikationsmodul auf, mit dem der Teilnehmer eine Funkverbindung mit der Vermittlungsstelle - oder mit einem anderen Teilnehmer des Intercom-Netzwerkes - aufbauen kann. Eine solche Funkstrecke unterliegt insbesondere dem DECT-Funkstandard. Ganz allgemein kommt allerdings im Rahmen der obigen Erfindung auch eine drahtlose Übertragung zwischen Teilnehmer und Vermittlungsstelle oder zwischen Teilnehmer und einem anderen Teilnehmer in Frequenzbereichen VHF, UHF, DECT, beispielsweise in Frequenzbereichen von 2,4 Gigahertz, 5,2 Gigahertz und 5,8 Gigahertz in Betracht.

Ein Teilnehmer der gattungsgemäßen Art und im Sinne der Erfindung ist insbesondere von einer Sprechstelle ausgebildet. Es handelt sich dabei um ein Intercom-Gerät, das in der Regel über ein Kabel mit der Vermittlungsstelle verbunden sind, und über ein Mikrophon und einen Lautsprecher verfügt, sowie über eine Mehrzahl von Tasten. Mit den Tasten, insbesondere Kurzwahltasten, kann in Folge Betätigung der Taste eine Bedienperson an dieser Sprechstelle eine direkte, insbesondere ausfallsichere, Audio-Verbindung zu einem anderen Teilnehmer des Intercom-Netzwerkes aufbauen.

Darüber hinaus kann eine solche Sprechstelle auch weitere einstellbare Funktionalitäten umfassen, wie beispielsweise Betätigungselemente zur Einstellung der Helligkeit einer Display-Anzeige oder zur Einstellung der Lautstärke des Lautsprechers, oder zur Einstellung der Empfindlichkeit des Mikrophons oder dergleichen. Die Funktionalitäten sind als Parameter einstellbar, das heißt, es können insbesondere manuell, durch Betätigung von Potentiometern oder Schaltern oder Tasten oder programmierbaren Elementen Werte oder Informationen eingestellt werden, sei es als Absolutwerte oder als relative Werte.

Ein Teilnehmer kann gemäß der Erfindung alternativ auch von einem sogenannten Beltpack bereitgestellt sein. Es handelt sich dabei um ein mit einer autarken Spannungsversorgung, z. B. mittels Batterie oder Akkumulator, versehenes Gerät, das an einer Bedienperson, z. B. an einem Kleidungsstück einer Bedienperson, befestigt werden oder von der Bedienperson getragen werden kann, und als mobiles Endgerät eines Intercom-Netzwerkes ausgestaltet ist. Die Bedienperson kann mit dem Beltpack freie Bewegungen durchführen. Das Beltpack weist einen Mikrophon-Anschluss auf, mit dem entweder ein Mikrophon und/oder ein Kopfhörer oder alternativ ein Headset kabelgebunden - oder mittels einer Funkverbindung, z. B. mittels Bluetooth - mit dem Beltpack verbunden werden kann.

Darüber hinaus weist das Beltpack ein Kommunikationsmodul auf, mit dem es insbesondere drahtlos über eine DECT-Funkstrecke mit der Vermittlungsstelle des Intercom-Netzwerkes oder mit einem anderen Teilnehmer des Intercom-Netzwerkes Audio-Signale austauschen kann.

Intercom-Netzwerke des Standes der Technik werden insbesondere bei Veranstaltungen oder Live-Events, wie Konzerten, Formel-1-Rennen, oder dergleichen eingesetzt. Hier können eine Vielzahl von Bedienperson zahlreiche unterschiedliche Aufgaben erfüllen. Um die komplexen Aufgabenstellungen eines Intercom-Netzwerkes während der Live-Veranstaltung mit der gebotenen Ausfallsicherheit durchführen zu können, werden das Intercom-Netzwerk und alle seine Teilnehmer im Vorfeld der Veranstaltung konfiguriert. Dabei werden für die Funktionalitäten eines Teilnehmers in der Regel Standardwerte eingestellt.

Während der Durchführung der Live-Veranstaltung können sich die Bedienpersonen an die jeweiligen Teilnehmer begeben, und dort - bei Bedarf - individuelle Einstellungen der Funktionalitäten vornehmen, und insbesondere die voreingestellten Parameter - die sogenannten Settings - ändern.

Ausgehend von einem Teilnehmer der gattungsgemäßen Art, wie dieser durch offenkundige Vorbenutzung durch die Anmelderin - druckschriftlich nicht belegbar - bekannt geworden ist, besteht die Aufgabe der Erfindung darin, den Teilnehmer derartig weiterzubilden, dass eine verbesserte Handhabung des Teilnehmers möglich wird.

Die Erfindung löst diese Aufgabe mit den Merkmalen des Anspruches 1, insbesondere mit denen des Kennzeichenteils, und ist demgemäß dadurch gekennzeichnet, dass an dem Teilnehmer ein NFC-Element angeordnet ist, mit dem eine Kommunikation mit einem, einer Bedienperson zugeordneten NFC-Gegenelement, durchführbar ist.

Das Prinzip der Erfindung besteht im Wesentlichen darin, an dem Teilnehmer, also einer Intercom-Sprechstelle oder einem Intercom-Beltpack, ein NFC-Element anzuordnen. Ein solches NFC-Element unterliegt definierten Industrie-Funkstandards, und kann mit einem NFC-Gegenelement gemäß diesem Standards kommunizieren. Dies bedarf einer zumindest kurzzeitigen Annäherung des NFC-Gegenelementes an das NFC-Element.

Das NFC-Gegenelement ist einer Bedienperson zugeordnet. Das NFC-Gegenelement ist beispielsweise als an einem Kleidungsstück der Bedienperson anclipsbarer oder um den Hals der Bedienperson umhängbarer Körper ausgebildet, wie dies z. B. bei Sicherheitsausweisen oder Identifikationskörpern üblich ist.

Das NFC-Gegenelement kann z. B. von einem einfachen Tag gebildet sein, der eine Benutzerkennung aufweist, bzw. der mit einer Benutzerkennung beschrieben ist. Jeder Benutzer kann eine eineindeutige oder zumindest für das Intercom-System eindeutige Kennung aufweisen.

Das NFC-Element kann infolge einer relativen Annäherung des NFC-Gegenelementes die Information über den Benutzer von dem NFC-Gegenelement empfangen. Dabei ist insbesondere von Bedeutung, dass das NFC-Gegenelement keinerlei eigener Stromversorgung bedarf, sondern als Schwingkreis eine elektromagnetische Anregung durch das NFC-Element erfahren kann. Das NFC-Element wird mit Betriebsspannung von dem Teilnehmer versorgt.

Die erfindungsgemäße Anordnung eines NFC-Elementes an dem Teilnehmer, mit dem eine Kommunikation mit einem einer Bedienperson zugeordneten NFC-Gegenelement durchführbar ist, erlaubt insoweit die Vornahme einer Anmeldung oder Registrierung einer bestimmten Bedienperson an dem Teilnehmer.

An dem Teilnehmer kann des weiteren eine Einrichtung zur Verwaltung von Bedienpersonen angeordnet sein, in der zuvor, im Zuge einer Konfiguration des Intercom-Netzwerkes, oder im Zuge einer Konfiguration des Teilnehmers, eine bestimmte Bedienperson oder mehrere bestimmte Bedienpersonen als autorisierte Bedienpersonen gespeichert oder vermerkt worden sind. Alternativ oder zusätzlich kann in der Einrichtung zur Verwaltung der Bedienpersonen einer bestimmten Bedienperson oder auch jeweils einer von mehreren Bedienpersonen ein bestimmter Parameterwert für die einstellbare Funktionalität zugeordnet worden sein.

Beispielsweise kann eine Bedienperson, die - z. B. aufgrund üblicher Arbeitsbedingungen - immer eine sehr hohe Lautstärke eines Lautsprechers während der Durchführung der Veranstaltung genießen möchte, einen entsprechend hohen Parameterwert für die einstellbare Lautstärke als Bediener-definierte Voreinstellung, oder als Bedienerabhängiges Setting, automatisch zugewiesen bekommen, sobald sich diese Bedienperson an dem Teilnehmer anmeldet. Für die Durchführung des Anmeldevorganges ist lediglich eine - denkbar einfache - Annäherung des NFC-Gegenelementes, bzw. des diesen tragenden Körpers, an das NFC-Element an dem Teilnehmer erforderlich.

Die Erfindung bietet darüber hinaus die Möglichkeit, auf herkömmliche, kommerziell erhältliche Bauelemente für das NFC-Element, z. B. auf ein NFC-Lesegerät, und für das NFC-Gegenelement, z. B. auf einen Tag, zurückzugreifen.

Der Tag kann dabei beispielsweise in einen Ausweis einlaminiert werden, oder an diesem befestigt, z. B. aufgeklebt, werden. Es kann insoweit eine sehr einfache Konstruktion und Ausgestaltung eines solchen Teilnehmers und eines das NFC-Gegenelement tragenden Körpers erreicht werden.

Gemäß einer vorteilhaften Ausgestaltung der Erfindung ist das NFC-Gegenelement Bestandteil eines von der Bedienperson tragbaren, insbesondere nach Art eines Ausweises tragbaren, Körpers, insbesondere eines umhängbaren oder anclipsbaren Körpers. Der Körper kann insoweit kartenartig, insbesondere scheckkartenartig, oder nach Art eines Ausweises, wie Personalausweis, ausgebildet sein, und, wie typischerweise nach Art eines Sicherheitsausweises, um den Hals einer Bedienperson umgehängt, oder unter Zuhilfenahme von Anclipsmitteln angeclipst werden. Denkbar ist auch, dass der Körper nach Art eines Ausweises oder einer Scheck-Karte ausgebildet ist, und in einem Portemonnaie einer Bedienperson untergebracht werden kann. Das NFC-Gegenelement kann insoweit der Bedienperson dauerhaft zugeordnet sein.

Die Bedienperson kann sich damit - unabhängig vom Veranstaltungsort, insbesondere, wenn die Bedienperson regelmäßig bei unterschiedlichen Veranstaltungen eingesetzt wird - immer mit ihrem eindeutig identifizierbaren Ausweis, nämlich dem NFC-Gegenelement, an dem entsprechenden Teilnehmer anmelden.

Gemäß einer weiteren vorteilhaften Ausgestaltung der Erfindung ist mit dem NFC-Gegenelement, welches der Bedienperson zugeordnet ist, eine Information über die Bedienperson an das NFC-Element übermittelbar. Insbesondere kann die Information über die Bedienperson eine Kennung oder einen Identifizierungscode der Bedienperson umfassen, oder eine andere Information, mit der der Teilnehmer einen Rückschluss auf die Bedienperson ziehen kann, beispielsweise eine Handykennung, oder eine Bluetooth-MAC-Adresse umfassen.

Jede Bedienperson weist insoweit eine eindeutige, dieser Bedienperson zuordenbare, Kennung auf. Die Information über die Bedienperson kann unmittelbar an dem NFC-Gegenelement an dem Körper, oder in einem Speicher des Körpers, der dem NFC-Gegenelement zugeordnet ist, gespeichert sein. Wie bei NFC-Tags üblich, kann der Tag auch unmittelbar - insbesondere einmalig im Werk - beschriftet werden oder konfiguriert werden, so dass eine Benutzerkennung in den Tag eingeschrieben wird. Diese Benutzerkennung kann - kodiert oder unkodiert - an das NFC-Element bei Annäherung des NFC-Gegenelementes an den Teilnehmer übermittelt werden, und von dem Teilnehmer, insbesondere von einer an dem Teilnehmer angeordneten oder diesem zugeordneten Einrichtung zur Verwaltung der Bedienpersonen, verarbeitet werden.

Die Erfindung löst die oben beschriebene Aufgabe gemäß einem weiteren Aspekt mit den Merkmalen des Anspruches 4, insbesondere mit denen des Kennzeichenteils, und ist demgemäß dadurch gekennzeichnet, dass dem Teilnehmer eine Einrichtung zur Verwaltung von Bedienpersonen zugeordnet ist, an der von einer Bedienperson ein Anmelde- und/oder Registrierungsvorgang durchführbar ist.

Das Prinzip der Erfindung besteht im Wesentlichen darin, dass an dem Teilnehmer eine Einrichtung zur Verwaltung von Bedienpersonen angeordnet oder diesem zugeordnet ist. Eine solche Einrichtung kann einen Mikroprozessor umfassen, in dem entsprechende elektronische, herkömmliche Bauelemente angeordnet sind, die eine Administration oder Verwaltung von Bedienpersonen ermöglicht. Insbesondere kann im Zuge einer Konfiguration des Teilnehmers in die Einrichtung zur Verwaltung von Bedienpersonen eingeschrieben werden, welche Bedienpersonen für diesen Teilnehmer vorgesehen sind, oder vorgesehen sein können. Zudem kann den vorgesehenen, autorisierten Bedienpersonen auch ein Parameterwert - bzw. im Falle der Einstellung mehrerer unterschiedlicher Funktionalitäten mehrere Parameterwerte - zugeordnet werden.

Die Einrichtung kann ausschließlich an einem bestimmten Teilnehmer angeordnet sein, z. B. ausschließlich an dem Beltpack oder an der Sprechstelle. Von der Erfindung ist aber auch umfasst, wenn an dem Teilnehmer lediglich ein Teil der Einrichtung für die Verwaltung von Bedienpersonen angeordnet ist, der mit anderen Teilen der Einrichtung zur Verwaltung von Bedienpersonen kooperiert, wobei die anderen Teile dieser Einrichtung an anderen Teilnehmern des Intercom-Netzwerkes, oder an einer Zentrale des Intercom-Netzwerkes, z. B. an der Vermittlungsstelle, angeordnet sind. In diesem Falle weist der Teilnehmer jedenfalls eine Einrichtung zur Verwaltung von Bedienpersonen auf, die als Bestandteil einer insgesamt in dem Intercom-Netzwerk zentral oder dezentral organisiert angeordneten Einrichtung vorgesehen ist. Die im letzteren Fall an dem Teilnehmer angeordnete Einrichtung zur Verwaltung von Bedienpersonen umfasst zumindest ein NFC-Element und Mittel zur Weiterleitung der von dem NFC-Element - von dem NFC-Gegenelement - empfangenen Informationen an eine Zentrale oder an eine Steuereinheit oder an die Vermittlungsstelle.

An der Einrichtung zur Verwaltung von Bedienpersonen ist von einer Bedienperson ein Anmelde- oder Registrierungsvorgang durchführbar. Hierzu genügt es, wenn die Bedienperson ein dieser zugeordnetes NFC-Gegenelement kurzzeitig an das NFC-Element an dem Teilnehmer annähert. Hierdurch können automatisch Informationen von dem NFC-Gegenelement an das NFC-Element übermittelt werden. Die zu übermittelnden Informationen können Informationen über die Bedienperson umfassen. Die Bedienperson kann sich auf diese Weise anmelden und registrieren.

Angemerkt sei, dass gemäß dieser Erfindung eine Anmeldung der Bedienperson an dem Teilnehmer auch auf andere Weise, als unter Vermittlung von NFC-Kommunikation, erfolgen kann. Beispielsweise kann der Teilnehmer durch Eingabe einer Ziffernfolge, oder eines Codes, oder eines PINs unmittelbar an dem Teilnehmer den Anmelde- oder Registrierungsvorgang durchführen.

Schließlich ist von der Erfindung auch umfasst, wenn eine Anmeldung der Bedienperson an dem Teilnehmer unter Verwendung der Bluetooth-MAC-Adresse oder einer anderen Kennung vorgenommen wird.

Gemäß einer vorteilhaften Ausgestaltung der Erfindung ist der Bedienperson ein bestimmter Parameterwert zugeordnet. Hierdurch kann auf bestimmte Vorlieben oder Erfahrungswerte der Bedienperson eingegangen, bzw. zurückgegriffen werden. Beispielsweise kann eine Belegung von Kurzwahltasten derart erfolgen, dass eine bestimmte Bedienperson die an einer Sprechstelle vorgesehenen Kurzwahltasten immer in der gleichen Art und Weise vorkonfiguriert erhält. Die Settings können also so gesetzt werden, dass beispielsweise immer die obere linke Kurzwahltaste an einer Sprechstelle einer bestimmten Bedienperson eine direkte Audio-Verbindung zu einer bestimmten anderen Bedienperson ermöglicht. Hierdurch kann die Bedienung des Teilnehmers während eines Live-Events sicherer ausgestaltet werden, da auf den bestehenden Erfahrungsschatz dieser Bedienperson zurückgegriffen werden kann. Fehlbedienungen können damit vermieden werden.

Gemäß einer vorteilhaften Ausgestaltung der Erfindung ist der Bedienperson ein bestimmter Parameterwert zugeordnet. Die Einrichtung zur Verwaltung von Bedienpersonen kann infolge eines Anmelde- oder Registrierungsvorganges einer Bedienperson an dem Teilnehmer dafür sorgen, dass der dieser Bedienperson zugeordnete Parameterwert unmittelbar infolge eines Anmeldevorgangs der Bedienperson für die Einstellung der Funktionalität verwendet wird. Die an dem Teilnehmer angemeldete Bedienperson muss insoweit selbst keinerlei Einstellungen mehr vornehmen. Stattdessen kann die Einrichtung zur Verwaltung der Bedienperson die Einstellung der Funktionalitäten - Bedienpersonabhängig - selbstständig vornehmen.

Gemäß einer weiteren vorteilhaften Ausgestaltung der Erfindung weist die Einrichtung einen Speicher auf, in dem der Parameterwert in Zuordnung zu der Bedienperson gespeichert ist. Die Einrichtung kann unmittelbar in dem Teilnehmer angeordnet sein, oder in der Vermittlungsstelle, oder in einem anderen Teilnehmer des Intercom-Netzwerkes. Vorteilhafterweise befindet sich der Speicher in dem Teilnehmer und/oder in der Vermittlungsstelle.

In dem Speicher ist der Parameterwert gespeichert, und zwar insbesondere in Zuordnung zu der Bedienperson. Der Parameter für die Einstellung der Funktionalität ist insoweit bedienpersonenbezogen gespeichert. Ein Abruf dieses gespeicherten Parameterwertes kann insoweit jedes Mal erfolgen, wenn sich die Bedienperson an dem Teilnehmer anmeldet.

Gemäß einer weiteren vorteilhaften Ausgestaltung der Erfindung stellt die Einrichtung nach erfolgter Anmeldung der Bedienperson an dem Teilnehmer die Funktionalität des Teilnehmers auf den Parameterwert dieser Bedienperson ein. Hierdurch können die benutzerdefinierten Settings erreicht werden.

Die eingangs beschriebene Aufgabe löst die Erfindung gemäß einem weiteren Aspekt mit den Merkmalen des Anspruches 8, insbesondere mit denen des Kennzeichenteils, und ist demgemäß dadurch gekennzeichnet, dass dem Teilnehmer eine Einrichtung zur Verwaltung von Bedienpersonen zugeordnet ist, die infolge einer Anmeldung einer Bedienperson an dem Teilnehmer einen voreingestellten Parameterwert für die Bedienperson abruft und die einstellbare Funktionalität auf den Parameterwert einstellt.

Das Prinzip der Erfindung besteht im Wesentlichen darin, dass dem Teilnehmer eine Einrichtung zur Verwaltung von Bedienpersonen zugeordnet ist, die infolge einer Anmeldung einer Bedienperson an dem Teilnehmer einen voreingestellten Parameterwert für die Bedienperson abruft, und die einstellbare Funktionalität auf diesen Parameterwert einstellt. Hierdurch können benutzerdefinierte Settings erreicht werden.

Bezüglich der verwendeten Merkmale und Begrifflichkeiten und deren Auslegung wird zur Vermeidung von Wiederholungen auf die obigen Ausführungen verwiesen.

Gemäß einer weiteren vorteilhaften Ausgestaltung der Erfindung ist vorgesehen, dass der Teilnehmer als Sprechstelle oder als Beltpack oder als Headset ausgebildet ist. Bezüglich der technischen Merkmale eines Beltpacks oder einer Sprechstelle wird auf die Sprechstellen und Beltpacks des Standes der Technik verwiesen, die insbesondere in den eingangs erwähnten Anmeldungen DE 10 2014 011 963 A1 und DE 10 2014 104 811 A1 beschrieben sind.

Gemäß einem weiteren Aspekt bezieht sich die Erfindung auf ein Intercom-Netzwerk nach dem Oberbegriff des Anspruches 10.

Die Aufgabe der Erfindung besteht darin, das Intercom-Netzwerk der gattungsgemäßen Art derartig weiterzubilden, dass es sicherer und komfortabler ausgestaltet ist.

Die Erfindung löst diese Aufgabe mit den Merkmalen des Anspruches 10.

Die Erfindung löst diese Aufgabe zudem auch mit den Merkmalen des Anspruches 11.

Demnach ist eine Konfigurationsvorrichtung vorgesehen, mit der eine Voreinstellung des Parameters durchführbar ist, wobei der voreingestellte Parameterwert einer Bedienperson zuordenbar und speicherbar ist. Die Konfigurationsvorrichtung kann beispielsweise eine an den Teilnehmer anschließbare elektrische oder elektronische Einrichtung, z. B. ein Computer sein. Alternativ kann auch vorgesehen sein, dass die Vermittlungsstelle selbst eine Konfigurationsvorrichtung ausbildet oder umfasst, an der durch unmittelbare manuelle Eingabe Voreinstellungen der Parameter der an die Vermittlungsstelle angeschlossenen Teilnehmer durchführbar sind.

Die Konfigurationseinrichtung kann erfindungsgemäß einen voreingestellten Parameterwert einer Bedienperson zuordnen. Andererseits kann für eine vorgegebene Bedienperson ein Parameterwert voreingestellt werden. Dieser eingestellte Parameterwert kann zusammen mit einer Zuordnung zu der Bedienperson gespeichert werden. Eine entsprechende Speicherung kann entweder in einer Vermittlungsstelle des Intercom-Netzwerkes, oder einem oder in mehreren Teilnehmern des Intercom-Netzwerkes, an denen sich die Bedienpersonen anmelden können, vorgenommen werden.

Im Übrigen wird zur Vermeidung von Wiederholungen auch auf die obigen Ausführungen bezüglich der Erläuterung und Auslegung der Merkmale und Begrifflichkeiten, verwiesen.

Die Erfindung betrifft darüber hinaus ein Verfahren zum Betreiben eines Intercom-Netzwerkes nach dem Oberbegriff des Anspruches 1.

Der Erfindung liegt die Aufgabe zugrunde, das bekannte Verfahren des Standes der Technik, wie es von der Anmelderin - druckschriftlich nicht belegbar - praktiziert wird, derartig weiter zu bilden, dass es komfortabler und sicherer wird.

Die Erfindung löst diese Aufgabe mit den Merkmalen des Anspruches 13.

Bezüglich der verwendeten Merkmale und Begrifflichkeiten wird bezüglich deren Verständnis und der Auslegung zur Vermeidung von Wiederholungen auf die obigen Ausführungen verwiesen.

Die Schritte a) bis c) des Anspruches 13 können vorteilhaft zeitlich - auch sehr weit - vor Durchführung der Veranstaltung durchgeführt werden, und insbesondere auch an einem von dem Veranstaltungsort entfernten Ort. Die Schritte d) und e) des Anspruches 13 werden vorteilhaft unmittelbar vor der Veranstaltung oder während der Durchführung der Veranstaltung an dem Ort der Veranstaltung durchgeführt.

Gemäß einer weiteren vorteilhaften Ausgestaltung der Erfindung ist vorgesehen, dass die Einrichtung im Zuge der Durchführung einer Autorisationsprüfung eine Anmeldung der Bedienperson an dem Teilnehmer nur zulässt, wenn die Bedienperson als eine autorisierte Bedienperson eingespeichert und in der Einrichtung hinterlegt ist. Gemäß dieser Ausführungsform kann vorgesehen sein, dass von der Einrichtung eine Autorisationsprüfung durchgeführt wird. Die Einrichtung zur Verwaltung von Bedienpersonen kann im Zuge der Anmeldung einer Bedienperson prüfen, ob der sich gerade anmeldende Benutzer überhaupt als autorisierter Benutzer oder als autorisierte Bedienperson zugelassen ist. Hierdurch wird eine Zugangskontrolle bereitgestellt.

Gemäß einer weiteren vorteilhaften Ausgestaltung der Erfindung ist eine sukzessive Anmeldung mehrerer unterschiedlicher Bedienpersonen an dem Teilnehmer durchführbar. Dies berücksichtigt, dass während des Zeitablaufes bestimmter Veranstaltungen auch unterschiedliche Bedienpersonen mit dem gleichen Teilnehmer arbeiten müssen.

Die Erfindung betrifft gemäß einem weiteren Aspekt einen Teilnehmer nach dem Oberbegriff des Anspruches 15.

Demgemäß besteht die Aufgabe der Erfindung darin, einen eingangs beschriebenen Teilnehmer des Standes der Technik derartig weiterzubilden, dass eine verbesserte Handhabung des Teilnehmers möglich wird,

Die Erfindung löst diese Aufgabe mit den Merkmalen des Anspruches 15, insbesondere mit denen des Kennzeichenteils, und ist demgemäß dadurch gekennzeichnet, dass an dem Teilnehmer ein RFID-Element angeordnet ist, mit dem eine Kommunikation mit einem, einer Bedienperson zugeordneten RFID-Gegenelement, durchführbar ist.

Das Prinzip der Erfindung besteht analog zu der beschriebenen Erfindung nach Anspruch 1 darin, an dem Teilnehmer ein RFID-Element anzuordnen und einer Bedienperson ein RFID-Gegenelement zuzuordnen.

Ein der Bedienperson zuzuordnendes RFID-Gegenelement wird in fachmännisch üblicher Weise auch als Transponder bezeichnet. Das an dem Teilnehmer anzuordnende RFID-Element wird als Lesegerät zum Auslesen des kennzeichnenden Codes am Transponder bezeichnet.

Zur Schilderung der Vorteile der Erfindung nach Anspruch 16 und zur Erläuterung der Funktionsweise und der Merkmale des Anspruches 16 kann auf die vorherigen Ausführungen zu Anspruch 1 und zu den von Anspruch 1 abhängigen Ansprüchen zur Vermeidung von Wiederholungen verwiesen werden.

Darüber hinaus kann jegliche Information, die im Rahmen dieser Patentanmeldung in Bezug zu einem NFC-Element und/oder zu einem NFC-Gegenelement offenbart oder vermittelt wird, im Rahmen der Erfindung gleichermaßen auch in Bezug zu einem RFID-Element, bzw. einem RFID-Gegenelement verwendet werden und gilt als in Bezug zu einem RFID-Element, bzw. einen RFID-Gegenelement im Rahmen dieser Patentanmeldung als offenbart.

Weitere Vorteile ergeben sich aus den nicht zitierten Unteransprüchen, sowie anhand der nachfolgenden Beschreibung der in den Figuren dargestellten Ausführungsbeispiele. Darin zeigen:
- Fig.1: in einer schematischen, blockschaltbildartigen Ansicht ein Ausführungsbeispiel eines erfindungsgemäßen Intercom-Systems mit zwei Vermittlungsstellen und insgesamt sechs daran angeschlossenen erfindungsgemäßen Sprechstellen, und einem Beltpack mit einer Funkverbindung zu der Sprechstelle,
- Fig. 2: in einer schematischen, blockschaltbildartigen Ansicht ein Ausführungsbeispiel einer erfindungsgemäßen Sprechstelle der Fig. 1 in vergrößerter Darstellung, und eine Bedienperson, die einen ausweisartigen Körper mit einem NFC-Gegenelement um den Hals gehängt trägt, und
- Fig. 3: die Bedienperson der Fig. 2 in Zusammenschau mit einem als Beltpack ausgebildeten Teilnehmer mit daran angeschlossenem Headset.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Das in seiner Gesamtheit in den Figuren mit 10 bezeichnete Intercom-Netzwerk wird nachfolgend anhand der in den Figuren dargestellten Ausführungsbeispiele erläutert. Auch die erfindungsgemäß ausgebildeten Teilnehmer des Intercom-Netzwerkes 10 werden nachfolgend beschrieben.

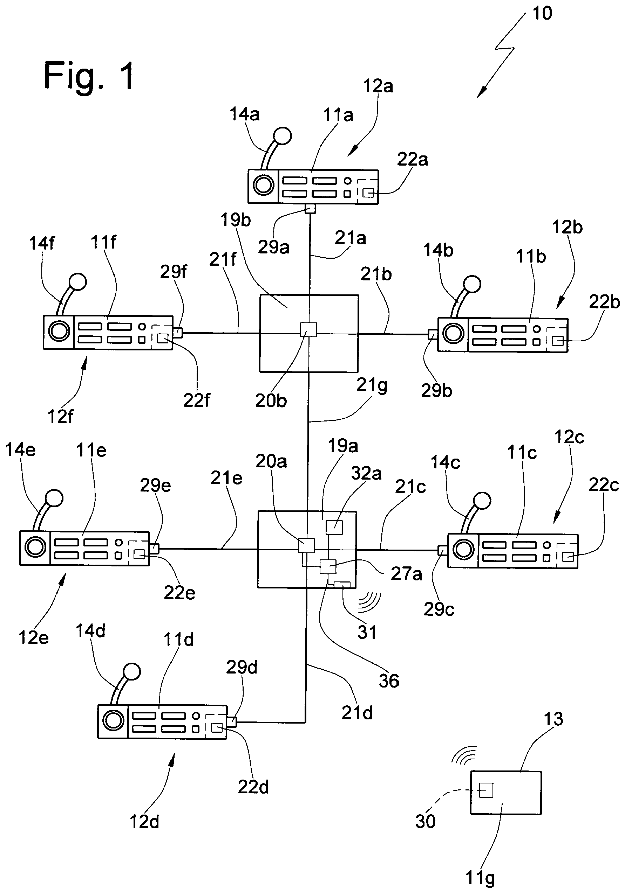

Ausweislich Fig. 1 umfasst das Intercom-Netzwerk 10 zwei Vermittlungsstellen 19a, 19b, die über eine Verbindungsleitung 21g miteinander verbunden sind. An die erste Vermittlungsstelle 19a sind drei stationäre Teilnehmer 11 c, 11d, 11 e und an die zweite Vermittlungsstelle 19b sind drei Teilnehmer 11 a, 11 b und 11f angeschlossen.

Jeder der Teilnehmer 11a, 11 b, 11 c, 11 d, 11e, 11f, 11g ist als Sprechstelle 12a, 12b, 12c, 12d, 12e, 12f ausgebildet. Die Sprechstellen sind jeweils über eine eigene Verbindungsleitung 21a, 21b, 21c, 21d, 21e, 21f mit der jeweiligen Vermittlungsstelle 19a, 19b verbunden.

Das Intercom-Netzwerk 10 gemäß einem Ausführungsbeispiel der Erfindung wird bei Veranstaltungen und Events, insbesondere Live-Veranstaltungen, eingesetzt. Die Zahl der an die Vermittlungsstellen 19a, 19b angeschlossenen Teilnehmer 11 ist im Prinzip beliebig und an die Erfordernisse der Berichterstattung oder der Begleitung oder der Durchführung der Veranstaltung oder des Events anpassbar.

Die Sprechstellen 12a, 12b, 12c, 12d, 12e, 12f werden als stationäre Teilnehmer 11a, 11 b, 11 c, 11d, 11e, 11 f, 11g bezeichnet. Das Intercom-Netzwerk 10 gemäß der Erfindung kann darüber hinaus auch ein oder mehrere mobile Teilnehmer 11g umfassen, die nach Art eines Beltpacks 13 ausgebildet sind.

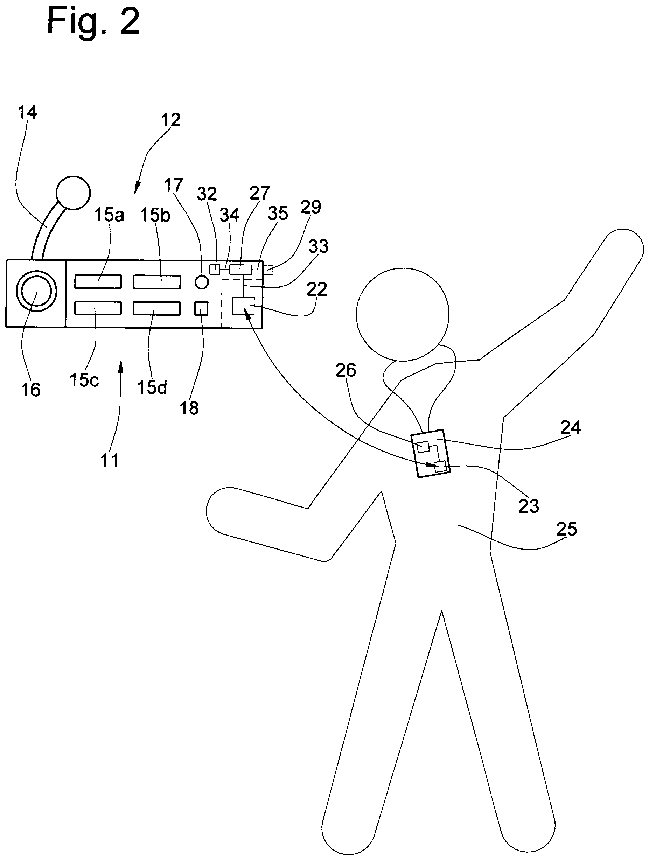

Anhand der Fig. 2 soll zunächst der grundsätzliche Aufbau und die Struktur einer erfindungsgemäßen Sprechstelle 12, stellvertretend für die Sprechstellen 12a, 12b, 12c, 12d, 12e, 12f der Fig. 1 veranschaulicht werden:
Eine Sprechstelle 12 umfasst bei dem Ausführungsbeispiel der Fig. 2 ein Mikrophon 14 und einen Lautsprecher 16. Die an dieser Sprechstelle 12 der Fig. 2 arbeitende Bedienperson 25 kann in das Mikrophon 14 Spracheingaben hinein vornehmen, und über den Lautsprecher 16 Audio-Informationen hören. Diese Audio-Informationen werden von der Sprechstelle 12 bi-direktional über einen Verbindungsanschluss 29 zum Anschluss eines in Fig. 2 nicht dargestellten Verbindungskabels 21 von der entsprechenden Vermittlungsstelle 19 (z. B. 19a gemäß Fig. 1) empfangen, bzw. an diese übermittelt.

Fig. 2 zeigt darüber hinaus, dass an der Sprechstelle 12 eine Mehrzahl von Kurzwahltasten, bei dem Ausführungsbeispiel der Fig. 2 insgesamt vier Kurzwahltasten, 15a, 15b, 15c, 15d, angeordnet sind.

Bei Betätigung einer Kurzwahltaste kann die Bedienperson 25 dieser Sprechstelle 12 der Fig. 2 in unmittelbare direkte, sichere Audio-Kommunikation mit einem anderen Benutzer an einem anderen Teilnehmer 11a, 11b, 11c, 11d, 11e, 11f, 11g des Intercom-Netzwerkes 10 der Fig. 1 treten.

Eine entsprechende Verschaltung der direkten Punkt-zu-Punkt-Verbindung wird über die Vermittlungsstellen 19a, 19b vorgenommen.

Ist beispielsweise die Kurzwahltaste 15a derartig eingestellt oder programmiert, dass eine Betätigung der Kurzwahltaste 15a eine Audio-Verbindung zu einer Bedienperson der Sprechstelle 12b des Intercom-Netzwerkes 10 der Fig. 1 herstellt, so ist zwischen der Sprechstelle 12 gemäß Fig. 2 und der Sprechstelle 12b gemäß Fig. 1 eine direkte, sichere Audioverbindung bewerkstelligbar.

Die Kurzwahltasten 15a, 15b, 15c, 15d sind einstellbar, wobei die entsprechenden Einstellungen von der Vermittlungsstelle 19a, 19b nachgehalten, bzw. dort gespeichert und/oder administriert oder verwaltet werden.

Die Sprechstelle 12 der Fig. 2 macht darüber hinaus deutlich, dass eine erste Funktionstaste 17 vorgesehen ist, mit der beispielsweise die Helligkeit der auf den Displays der Kurzwahltasten 15a, 15b, 15c, 15d erscheinenden Hintergrundbeleuchtung eingestellt werden kann. Darüber hinaus zeigt die Sprechstelle 12 der Fig. 2 eine Funktionstaste 18, mit der beispielsweise die Lautstärke des Lautsprechers 16 eingestellt werden kann.

Bei Sprechstellen des Standes der Technik konnte die Bedienperson die Funktionalitäten der Kurzwahltasten 15a, 15b, 15c, 15d bzw. der Funktionstasten 17, 18 lediglich manuell vor Ort einstellen. Hierzu konnte beispielsweise eine als Potentiometer ausgebildete Funktionstaste 17 manuell gedreht werden, um die Helligkeit des Displays auf den Tasten 15a, 15b, 15c, 15d einzustellen, oder die Funktionstaste 18, ebenfalls ausgebildet nach Art eines Potentiometers, gedreht werden, um die Lautstärke einzustellen. Gleichermaßen konnte eine Programmierung der Kurzwahltasten 15a, 15b, 15c, 15d durch die Bedienperson manuell, z. B. durch alphanummerische Eingabefelder oder über ein anderes User-Interface erfolgen. So kann der Benutzer beispielsweise nach Installation des Intercom-Netzwerkes vor Ort auf Wunsch beispielsweise Anpassungen an die lokalen Gegebenheiten vornehmen, oder im Hinblick auf seine Erfahrungsgrundsätze z. B. eine bestimmte Kurzwahltaste 15a so programmieren, dass ein ihm genehmer oder gewünschter Benutzer einer anderen Sprechstelle immer an einem festen Platz auf dem Bedienfeld einprogrammiert ist.

So kann beispielsweise die Funktionstaste 15a immer eine Verbindung zu einem Aufnahmeleiter herstellen.

Im Sinne der vorliegenden Erfindung wird die Möglichkeit einer einstellbaren Zielwahltaste oder Rufwahltaste als Funktionalität bezeichnet. Auch die Einstellung eines Dimmwertes für das beleuchtete Display der Taste 15a über die Funktionstaste 17 oder die Einstellung der Lautstärke, wird als Einstellung einer Funktionalität im Sinne der Erfindung angesehen.

Die Einstellung einer bestimmten Zielperson oder einer bestimmten Ziel-Sprechstelle oder eines bestimmten Ziel-Teilnehmers wird als Einstellung eines Parameterwertes im Sinne der vorliegenden Patentanmeldung angesehen.

Der Parameter für eine Zielwahltaste kann beispielsweise der Name einer bestimmten anderen Bedienperson, z. B. Axel Müller, oder dessen Identifikationsnummer, z. B. Bedienperson Nr. 22, oder eine Abkürzung oder ein Code sein. Der Parameter kann allerdings alternativ auch eine Bezeichnung der Sprechstelle bzw. des Teilnehmers des Intercom-Netzwerkes sein, wie beispielsweise die Bezeichnung "Aufnahmeleitung" oder "Moderator" oder "Künstler xy" oder dergleichen.

Gemäß der Erfindung ist vorgesehen, dass sich eine Bedienperson 25 an einem Teilnehmer 11 gemäß Fig. 2, also an einer Sprechstelle 12 gemäß Fig. 2, anmelden kann. Die Erläuterung der Sprechstelle 12 der Fig. 2 wird daher lediglich beispielhaft für sämtliche Teilnehmer 11a, 11 b, 11c, 11 d, 11e, 11f, 11g des Intercom-Netzwerkes der Fig. 1 erfolgen:
Ausweislich Fig. 2 weist die Sprechstelle 12 eine Einrichtung 27 zur Verwaltung von Bedienpersonen auf. Es handelt sich dabei beispielsweise um einen Mikroprozessor oder den Bestandteil einer elektronischen Schaltung. Die Einrichtung 27 umfasst ein NFC-Element 22, mit dem sie über eine Verbindungsleitung 33 verbunden ist.

Die Einrichtung 27 zur Verwaltung von Bedienpersonen ist darüber hinaus über eine Verbindungsleitung 34 mit einem Speicher 32 verbunden. Schließlich ist die Einrichtung 27 zur Verwaltung von Bedienpersonen z. B. unmittelbar über eine Verbindungsleitung 35, oder mittelbar, z. B. über eine nicht dargestellte Steuereinheit, darüber hinaus mit einem Verbindungsanschluss 29 verbunden, über den die Sprechstelle 12 mit der Vermittlungsstelle 19a gemäß Fig. 1 verbindbar ist.

Die Bedienperson 25 weist einen Körper 24, in der Art eines Ausweisdokumentes, auf, der ein NFC-Gegenelement 23 umfasst. Dieses kann in den beispielsweise Personalausweis- oder Scheckkarten-großer Körper einlaminiert sein, oder auf diesen aufgeklebt sein. Das NFC-Gegenelement 23 kann ebenfalls einen Speicherbaustein 26 aufweisen.

Im Zuge der Konfiguration der Sprechstelle 12, beispielsweise im Zuge der Konfiguration des Intercom-Netzwerkes 10 der Fig. 1 und der damit einhergehenden Konfiguration der Sprechstelle 12 der Fig. 2, kann eingestellt oder programmiert werden, welche Bedienpersonen mit der Sprechstelle 12 zu dem Zeitpunkt der Veranstaltung arbeiten soll oder arbeiten darf. Dies können unter Umständen auch mehrere Bedienpersonen sein.

Des weiteren kann im Zuge der Konfiguration der Sprechstelle 12 eine Vor-Einstellung von Parameterwerten der zuvor beschriebenen Funktionalitäten festgelegt werden: So kann beispielsweise für eine bestimmte Bedienperson, z. B. für die Bedienperson Nummer 22 oder die Bedienperson mit dem Namen Axel Müller, festgelegt werden, dass eine Voreinstellung und Speicherung der Parameterwerte für die Funktionstasten 15a, 15b, 15d, derart erfolgt, dass bestimmte Ziel-Teilnehmer 11 a, 11b, 11c, 11d, 11 e, 11f, 11g bei Betätigung der entsprechenden Kurzwahltaste 15a, 15b, 15c, 15d angesprochen werden. Auch können unter Bezugnahme zu diesem Benutzer Nummer 22 oder für die Bedienperson mit dem Namen Axel Müller festgehalten werden, dass ein vorgegebener Parameterwert für die Funktionstasten 17 und 18 eingestellt wird.

Entsprechende Parameterwerte können, in Zuordnung zu der bestimmten Bedienperson Nr. 22, in dem Speicher 32 in dem Teilnehmer 11, also der Sprechstelle 12, abgespeichert werden.

Findet nun die Live-Veranstaltung statt, kann sich die Bedienperson 25 an dem Teilnehmer 11 der Fig. 2 wie folgt anmelden:
Der Teilnehmer 25 hält seinen Ausweiskörper 24 mit dem NFC-Gegenelement 23 infolge einer relativen Annäherung an das NFC-Element 22 kurz an dieses oder bringt es an dieses heran, insbesondere unter einen Abstand von beispielsweise nur wenigen Zentimetern. Infolge dieser Annäherung findet eine Datenkommunikation nach dem NFC-Standard zwischen NFC-Element 22 und NFC-Gegenelement 23 statt. Das NFC-Gegenelement kann im Zuge dieses Datenaustausches eine Information über die Bedienperson 25, beispielsweise eine Benutzerkennung oder den Namen der Bedienperson, an das NFC-Element 22 übermitteln. Das NFC-Gegenelement 23 kann diese Information entweder in sich tragen, oder einem gesonderten Speicherelement 26 an dem Körper 24 entnehmen.

Von dem NFC-Element 22 wird diese Information über die Verbindungsleitung 33 an die Einrichtung 27 zur Verwaltung von Bedienpersonen übermittelt. Unmittelbar nach Erhalt der Informationen über den angemeldeten Benutzer 25 kann die Einrichtung 27 veranlassen, dass die zu dieser Bedienperson 25 in dem Speicher 32 abgespeicherten Parameterwerte als Funktionalitäten für die entsprechenden Funktionselemente 15a, 15b, 15c, 15d, 15, 17, 18 eingestellt werden.

Die Bedienperson 25 muss sich insoweit lediglich gegenüber der Sprechstelle 12 durch eine Anmeldung ausweisen oder registrieren, und kann auf die benutzerdefinierten Settings unmittelbar zurückgreifen, ohne, dass irgendeine individuelle Einstellung durch den Teilnehmer vor Ort erforderlich ist. Freilich sind von der Erfindung auch Ausführungsbeispiele von Teilnehmern 11, 12 umfasst, bei denen die Bedienperson 25 nach Anmeldung noch ergänzend Änderungen der Einstellungen der Funktionalitäten vornehmen kann.

Meldet sich an der Sprechstelle 12 der Fig. 2 nicht die Bedienperson 25 gemäß Fig. 2 an, sondern eine andere Bedienperson, können die in dem Speicher 32 ebenfalls abgelegten Parameter für diese andere Bedienperson ebenfalls als Settings übernommen werden.

So kommt es im Zweifel nicht unbedingt darauf an, welches individuelle Gerät 11, 12 der entsprechenden Bedienperson zugeordnet wird, sondern es können durch eine entsprechende Speicherung von Informationen in dem Speicher 32 der Einrichtung 27 die erforderlichen Informationen vorgehalten werden.

Bei dem Ausführungsbeispiel gemäß Fig. 2 ist die Einrichtung 27 zur Verwaltung von Bedienpersonen autonom in der Sprechstelle 12, also in dem Teilnehmer 11, angeordnet.

Gleichermaßen können sämtliche bei dem Intercom-System 10 der Fig. 1 dargestellten Teilnehmer 11 eine eigene solche Einrichtung 27 aufweisen.

Von der Erfindung ist allerdings auch umfasst, wenn die Einrichtung 27 zur Verwaltung von Bedienpersonen dezentral angeordnet ist. Beispielsweise können Bestandteile dieser Einrichtung zur Verwaltung von Bedienpersonen, z. B. ein Bestandteil 27a gemäß Fig. 1, auch in einer oder mehreren der Vermittlungsstellen 19a, 19b angeordnet sein.

Bestandteile 27a der Einrichtung 27 zur Verwaltung von Bedienpersonen können insoweit in der Vermittlungsstelle 19a, 19b angeordnet sein, und mit anderen Bestandteilen wie beispielsweise der Einrichtung 27 gemäß Fig. 2, in der Sprechstelle einen entsprechenden Datenaustausch pflegen.

Bis zu welchem Grad eine Organisation der Intelligenz der Einrichtung 27 zur Verwaltung von Bedienpersonen dezentral vorgenommen wird, also verteilt wird auf mehrere Teilnehmer 11a, 11 b, 11 c, 11d, 11 e, 11f, 11 g, oder zentral, also im Wesentlichen in einer Vermittlungsstelle 19a angeordnet ist, bleibt dem Fachmann in Anpassung an die erforderliche Gegebenheiten überlassen.

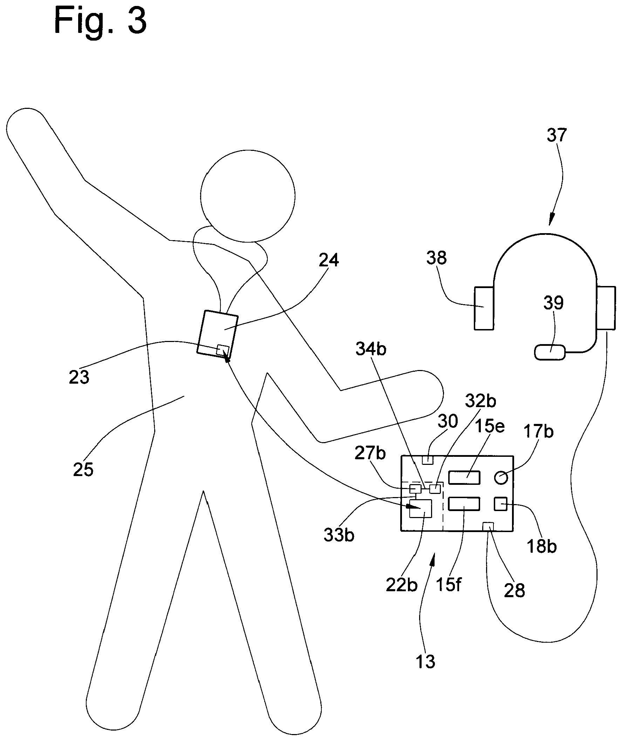

Ausweislich des Ausführungsbeispiels der Fig. 1 weist das Intercom-Netzwerk 10 auch noch einen mobilen Teilnehmer 11g in Form eines Beltpacks 13 auf. Dieser ist in Fig. 1 lediglich schematisch dargestellt, und mit mehr Einzelheiten in Fig. 3 dargestellt.

Ausweislich Fig. 1 weist die Vermittlungsstelle 19a ein Kommunikationsmodul 31 auf, das zu dem Beltpack 13 eine Funkverbindung nach dem DECT-Standard aufbauen kann. Hierzu weist das Beltpack 13 ein Kommunikationsmodul 30, und die Vermittlungsstelle 19a ein Kommunikationsmodul 31, die miteinander in eine Funkverbindung zur Übermittlung von Audio-Informationen eintreten können.

Das Kommunikationsmodul 31 kann über eine Steuerleitung 36 an dem Bestandteil 27a der Einrichtung zur Verwaltung von Bedienpersonen oder auch unmittelbar an einem Mikroprozessor 20a der Vermittlungsstelle 19a angeschlossen sein.

Die Fig. 1 macht darüber hinaus auch deutlich, dass ein Speicher 32a zur Speicherung von Parameterwerten unter Zuordnung zu unterschiedlichen Bedienpersonen ebenfalls in der Vermittlungsstelle 19a angeordnet sein kann.

Im Rahmen des ohnehin durchzuführenden Datenaustausches zwischen den einzelnen Teilnehmern 11a, 11 b, 11 c, 11d, 11e, 11f, 11 g und den Vermittlungsstellen 19a, 19b kann darüber hinaus auch ein Austausch der in dem Speicher 32a der Vermittlungsstelle 19a bzw. der in dem Speicher 32 der Sprechstelle 12 gemäß Fig. 2 enthaltenen Parameterwerte und zugeordneten Informationen über die Bedienpersonen erfolgen.

Ausweislich Fig. 3 soll nun der strukturelle Aufbau des erfindungsgemäßen Beltpacks 13 erläutert werden:
Das Beltpack kann wiederum - wie die Sprechstelle 12 - Zielwahltasten 15e, 15f aufweisen, die programmierbar sind. Gleichermaßen können Funktionstasten 17b und 18b vorgesehen sein, die z. B. den Funktionstasten 17, 18 der Sprechstelle 12 gemäß Fig. 2 entsprechen können.

Das Beltpack 13 ist über einen Mikrophonanschluss 28 oder über einen Headsetanschluss mit einem Headset 37 verbunden. Dieses kann Kopfhörer 38 und ein Mikrophon 39 aufweisen.

Das Beltpack 13 der Fig. 3 weist ein Kommunikationsmodul 30 auf, mit dem es eine Audio-Verbindung mit dem Kommunikationsmodul 31 an der Vermittlungsstelle 19a durchführen kann.

Um eine Bedienperson 25 gemäß Fig. 3 unter Zuhilfenahme eines NFC-Gegenelementes 23 an dem Beltpack 13 anzumelden, ist an dem Beltpack 13 ein NFC-Element 22d vorgesehen. Dieses ist über eine Steuerleitung 33b mit einer Einrichtung 27b zur Verwaltung von Bedienpersonen vorgesehen. Die Einrichtung 27b zur Verwaltung von Bedienpersonen ist über eine Steuerleitung 34b mit einem Speicher 32b verbunden. In dem Speicher 32b sind Parameterwerte und diesen zugehörige Informationen über die Bedienperson 25 abgelegt.

Meldet sich die Bedienperson 25 durch Annäherung des NFC-Gegenelementes 23 an das NFC-Element 22b an dem Beltpack 13 an, können die benutzerdefinierten Voreinstellungen (Settings) für die Funktionselemente 15e, 15f, 17b, 18b übernommen werden. Die entsprechende Bearbeitung wird entweder von der Einrichtung 27b zur Verwaltung von Bedienpersonen oder von einem nicht dargestellten elektronischen Bauelement im Beltpack 13 durchgeführt.

Eine Konfigurationsvorrichtung, mit der eine Konfiguration des Intercom-Netzwerkes 10 und/oder der einzelnen Teilnehmer 11a, 11 b, 11 c, 11d, 11e, 11f durchgeführt werden kann, ist in den Figuren nicht dargestellt. Es kann sich bei der Konfigurationsvorrichtung im einfachsten Fall um einen Computer handeln, der z. B. über einen Anschluss eines Datenkabels an eine der beiden Vermittlungsstellen 19a, 19b angeschlossen werden kann, und mit dieser in Kommunikation treten kann, und mittels des Mikroprozessor 20a und/oder mittels der Einrichtung 27a, 27 in den Speicher 32a entsprechende Parameterwerte und Zuordnungen zu Bedienpersonen 25 einschreiben kann. Gleichermaßen kann von dieser Konfigurationseinrichtung auch unmittelbar - bei Bedarf - die Sprechstelle 12 gemäß Fig. 2 angesprochen werden, und dort unmittelbar auf den Speicher 32 zugegriffen werden.

Ausführungsbeispiele der Erfindung umfassen Intercom-Netzwerke 10 mit nur einer Vermittlungsstelle 19, oder auch mit mehreren Vermittlungsstellen, wie z. B. zwei Vermittlungsstellen 19a, 19b, wie in Fig. 1 dargestellt. Hier kommt es nach dem Belieben des Fachmannes darauf an, ob ein solches Intercom-Netzwerk zentral oder dezentral organisiert wird.

Die zweite Vermittlungsstelle 19b des Ausführungsbeispiels der Fig. 1 kann einen ähnlichen oder identischen Aufbau aufweisen, wie in Fig. 1 bei der Vermittlungsstelle 19a gezeigt. So kann auch vorgesehen sein, dass der Beltpack eine Audio-Funkverbindung nicht nur mit der Vermittlungsstelle 19a, sondern auch mit der Vermittlungsstelle 19b durchführen kann. Denkbar und von der Erfindung umfasst ist auch, wenn ein Beltpack 13 eine Audio-Funkverbindung mit einem anderen stationären Teilnehmer 11 a, 11 b, 11 c, 11 d, 11 e, 11f durchführt.

Die Beschreibung der Ausführungsbeispiele in den Zeichnungen bezieht sich auf ein NFC-Element 22 und ein NFC-Gegenelement 23.

Bei einem weiteren, nicht dargestellten, aber von der Erfindung mit umfassten Ausführungsbeispiel sind die in den Zeichnungen dargestellten Elemente 22, 22a, 22b, 22c, 22d, 22e, 22f sämtlich RFID-Elemente und das dargestellte Element 23 gemäß der Zeichnungen ist ein RFID-Gegenelement.

## Patentansprüche

1. Teilnehmer (11a, 11b, 11c, 11d, 11e, 11f, 11g) eines Intercom-Netzwerkes (10) zur Durchführung von Echtzeit-Audiokommunikation mit anderen Teilnehmern dieses Intercom-Netzwerkes, umfassend einen Audio-Eingang, insbesondere ein Mikrophon (14, 14a, 14b, 14c, 14d, 14e, 14f) oder einen Mikrophon-Anschluss (28), und einen Verbindungsanschluss (29) oder ein Kommunikationsmodul (30) zur Verbindung mit einer Vermittlungsstelle (19a, 19b) des Intercom-Netzwerkes, umfassend wenigstens eine als Parameter einstellbare, insbesondere manuell einstellbare, Funktionalität, wie Tastenbelegung, Zielruf-Kurzwahltaste, Helligkeit, Lautstärke oder dergleichen, **dadurch gekennzeichnet, dass** an dem Teilnehmer ein NFC-Element (22, 22a, 22b, 22c, 22d, 22e, 22f) angeordnet ist, mit dem eine Kommunikation mit einem, einer Bedienperson (25) zugeordneten NFC-Gegenelement (23), durchführbar ist.

2. Teilnehmer nach Anspruch 1, **dadurch gekennzeichnet, dass** das NFC-Gegenelement (23) Bestandteil eines von der Bedienperson (25) tragbaren, insbesondere nach Art eines Ausweises tragbaren, Körpers (24), insbesondere eines umhängbaren oder anclipsbaren Körpers, ist.

3. Teilnehmer nach Anspruch 1 oder 2, **dadurch gekennzeichnet, dass** mit dem der Bedienperson (25) zugeordneten NFC-Gegenelement eine Information über die Bedienperson, insbesondere eine Kennung oder ein Identifizierungscode der Bedienperson, an das NFC-Element (22, 22a, 22b, 22c, 22d, 22e, 22f) übermittelbar ist.

4. Teilnehmer (11a, 11b, 11c, 11d, 11e, 11f, 11g) eines Intercom-Netzwerkes (10) zur Durchführung von Echtzeit-Audiokommunikation mit anderen Teilnehmern dieses Intercom-Netzwerkes, insbesondere Teilnehmer nach einem der Ansprüche 1 bis 3, umfassend einen Audio-Eingang, insbesondere ein Mikrophon (14, 14a, 14b, 14c, 14d, 14e, 14f) oder einen Mikrophon-Anschluss (28), und einen Verbindungsanschluss (29) oder ein Kommunikationsmodul (30) zur Verbindung mit einer Vermittlungsstelle (19a, 19b) des Intercom-Netzwerkes (10), umfassend wenigstens eine als Parameter einstellbare, insbesondere manuell einstellbare, Funktionalität, wie Tastenbelegung, Zielruf-Kurzwahltaste, Helligkeit, Lautstärke od. dgl., **dadurch gekennzeichnet, dass** dem Teilnehmer eine Einrichtung (27, 27b) zur Verwaltung von Bedienpersonen (25) zugeordnet ist, an der von einer Bedienperson ein Anmelde- und/oder Registrierungsvorgang durchführbar ist.

5. Teilnehmer nach Anspruch 4, **dadurch gekennzeichnet, dass** der Bedienperson (25) ein bestimmter Parameterwert für die einstellbare Funktionalität zugeordnet ist.

6. Teilnehmer nach Anspruch 4 oder 5, **dadurch gekennzeichnet, dass** die Einrichtung (27, 27b) einen Speicher (32, 32a) aufweist, in dem der Parameterwert in Zuordnung zu der Bedienperson gespeichert ist.

7. Teilnehmer nach einem der Ansprüche 4 bis 6, **dadurch gekennzeichnet, dass** die Einrichtung (27, 27b) nach erfolgter Anmeldung der Bedienperson die Funktionalität auf den Parameterwert der Bedienperson (25) einstellt.

8. Teilnehmer (11a, 11b, 11c, 11d, 11e, 11f, 11g) eines Intercom-Netzwerkes (10) zur Durchführung von Echtzeit-Audiokommunikation mit anderen Teilnehmern dieses Intercom-Netzwerkes, insbesondere Teilnehmer nach einem der Ansprüche 1 bis 6, umfassend einen Audio-Eingang, insbesondere ein Mikrophon (14, 14a, 14b, 14c, 14d, 14e, 14f, 14g) oder einen Mikrophon-Anschluss (28), und einen Verbindungsanschluss (29) oder ein Kommunikationsmodul (30) zur Verbindung mit einer Vermittlungsstelle (19a, 19b) des Intercom-Netzwerkes (10), umfassend wenigstens eine als Parameter einstellbare, insbesondere manuell einstellbare, Funktionalität, wie Tastenbelegung, Zielruf-Kurzwahltaste, Helligkeit, Lautstärke od. dgl., **dadurch gekennzeichnet, dass** dem Teilnehmer eine Einrichtung (27, 27b) zur Verwaltung von Bedienpersonen zugeordnet ist, die infolge einer Anmeldung einer Bedienperson (25) an dem Teilnehmer (11) einen voreingestellten Parameterwert für die Bedienperson abruft und die einstellbare Funktionalität auf den Parameterwert einstellt.

9. Teilnehmer nach einem der vorangegangenen Ansprüche, **dadurch gekennzeichnet, dass** der Teilnehmer als Sprechstelle (12) oder Beltpack (13) ausgebildet ist.

10. Intercom-Netzwerk (10) zur Echtzeit-Audiokommunikation zwischen Teilnehmern (11a, 11b, 11c, 11 d, 11e, 11 f, 11g), die jeweils über eine Verbindungsleitung (21 a, 21 b, 21 c, 21 d, 21 e, 21f) oder über eine Funkstrecke an eine Vermittlungsstelle (19a, 19b) angeschlossen sind, wobei mittels der Vermittlungsstelle Verbindungen, insbesondere ausfallsichere Punkt-zu-Punkt-Verbindungen, zwischen den Teilnehmern schaltbar sind, wobei wenigstens ein Teilnehmer, insbesondere ein Teilnehmer nach einem der vorangegangenen Ansprüchen 1 bis 9, als stationärer Teilnehmer in Form einer Sprechstelle (12, 12a, 12b, 12c, 12d, 12e, 12f) oder als mobiler Teilnehmer (11 g, 13) in Form eines Beltpack ausgebildet ist, wobei wenigstens ein Parameter einer Funktionalität, wie insbesondere eine Tastenbelegung, ein Lautstärkewert, ein Helligkeitswert oder dergleichen, des Teilnehmers einstellbar ist, **dadurch gekennzeichnet, dass** das Intercom-Netzwerk wenigstens einen Teilnehmer nach einem der vorangehenden Ansprüche umfasst.

11. Intercom-Netzwerk (10), insbesondere nach Anspruch 10, zur Echtzeit-Audiokommunikation zwischen Teilnehmern (11a, 11 b, 11 c, 11 d, 11 e, 11f, 11g), die jeweils über eine Verbindungsleitung (21 a, 21 b, 21c, 21 d, 21e, 21f) oder über eine Funkstrecke an eine Vermittlungsstelle (19a, 19b) angeschlossen sind, mit der Verbindungen, insbesondere ausfallsichere Punkt-zu-Punkt-Verbindungen, zwischen den Teilnehmern schaltbar sind, wobei wenigstens ein Teilnehmer als stationärer Teilnehmer in Form einer Sprechstelle (12) oder als mobiler Teilnehmer in Form eines Beltpack (13) ausgebildet ist, und wobei wenigstens ein Parameter einer Funktionalität des Teilnehmers, wie insbesondere eine Tastenbelegung, ein Lautstärkewert, ein Helligkeitswert oder dergleichen, einstellbar, insbesondere manuell einstellbar ist, **dadurch gekennzeichnet, dass** eine Konfigurationsvorrichtung vorgesehen ist, mit der eine Voreinstellung des Parameters durchführbar ist, wobei der voreingestellte Parameterwert einer Bedienperson zuordenbar und speicherbar ist.

12. Intercom-Netzwerk (10) nach Anspruch 11, **dadurch gekennzeichnet, dass** bei Anmeldung der Bedienperson (25) an dem Teilnehmer (11 a, 11 b, 11 c, 11 d, 11 e, 11f) der gespeicherte voreingestellte Parameterwert aufrufbar ist.

13. Verfahren zum Betreiben eines Intercom-Netzwerkes (10), insbesondere eines Intercom-Netzwerkes nach einem der Ansprüche 10 bis 12, zur Echtzeit-Audiokommunikation zwischen Teilnehmern, die jeweils über eine Verbindungsleitung (21a, 21b, 21c, 21d, 21e, 21f) oder über eine Funkstrecke an eine Vermittlungsstelle (19a, 19b) angeschlossen sind, mittels der Verbindungen, insbesondere ausfallsichere Punkt-zu-Punkt-Verbindungen, zwischen den Teilnehmern schaltbar sind, wobei an wenigstens einem Teilnehmer, der als stationärer Teilnehmer in Form einer Sprechstelle (12) oder als mobiler Teilnehmer (11g) in Form eines Beltpack (13) ausgebildet ist, wenigstens ein Parameter einer Funktionalität, wie insbesondere eine Tastenbelegung, ein Lautstärkewert, ein Helligkeitswert oder dergleichen, einstellbar, insbesondere manuell einstellbar, ist, **gekennzeichnet durch** die Schritte:
a) Konfigurieren des Netzwerkes (10),
b) Konfigurieren eines Teilnehmers (11a, 11b, 11c, 11 d, 11 e, 11f, 11g), insbesondere eines Teilnehmers nach einem der Ansprüche 1 bis 9, durch Voreinstellen wenigstens eines Parameters und Zuordnen des voreingestellten Parameterwertes zu einer Bedienperson (25),
c) Speichern des voreingestellten Parameterwertes, insbesondere in einem Speicher (32, 32a) einer dem Teilnehmer zugeordneten Einrichtung (27, 27a) zur Verwaltung von Bedienpersonen,
d) Anmelden einer Bedienperson (25) an dem Teilnehmer (11),
e) Einstellen der Funktionalität mit dem dieser Bedienperson (25) zugeordneten Parameterwert.

14. Verfahren nach Anspruch 13, **dadurch gekennzeichnet, dass** die Einrichtung (27, 27a) im Zuge der Durchführung einer Autorisationsprüfung eine Anmeldung der Bedienperson (25) an dem Teilnehmer (11a, 11b, 11c, 11d, 11e, 11f, 11g) nur zulässt, wenn die Bedienperson (25) als eine autorisierte Bedienperson in einem Speicher (32, 32a) der Einrichtung hinterlegt ist, und/oder, dass eine sukzessive Anmeldung mehrerer unterschiedlicher Bedienpersonen (25) an dem Teilnehmer (11 a, 11b, 11c, 11 d, 11 e, 11f, 11 g) durchführbar ist.

15. Teilnehmer (11a, 11b, 11c, 11d, 11e, 11f, 11g) eines Intercom-Netzwerkes (10) zur Durchführung von Echtzeit-Audiokommunikation mit anderen Teilnehmern dieses Intercom-Netzwerkes, umfassend einen Audio-Eingang, insbesondere ein Mikrophon (14, 14a, 14b, 14c, 14d, 14e, 14f) oder einen Mikrophon-Anschluss (28), und einen Verbindungsanschluss (29) oder ein Kommunikationsmodul (30) zur Verbindung mit einer Vermittlungsstelle (19a, 19b) des Intercom-Netzwerkes, umfassend wenigstens eine als Parameter einstellbare, insbesondere manuell einstellbare, Funktionalität, wie Tastenbelegung, Zielruf-Kurzwahltaste, Helligkeit, Lautstärke oder dergleichen, **dadurch gekennzeichnet, dass** an dem Teilnehmer ein RFID-Element (22, 22a, 22b, 22c, 22d, 22e, 22f) angeordnet ist, mit dem eine Kommunikation mit einem, einer Bedienperson (25) zugeordneten RFID-Gegenelement (23), durchführbar ist.
